# EUROPÄISCHE PATENTSCHRIFT

(11) **EP 0 898 362 B1**
(45) Veröffentlichungstag und Bekanntmachung des Hinweises auf die Patenterteilung: **12.12.2007**
(21) Anmeldenummer: 97810574.0
(22) Anmeldetag: 18.08.1997
(51) Int. Cl.: H02P 7/00

(54) **Verfahren zur Versorgung einer Gasturbinenanlage**
Method for supplying a gas turbine plant
Méthode d'alimentation pour une installation de turbine à gaz

(43) Veröffentlichungstag der Anmeldung: 24.02.1999
(73) Patentinhaber: Alstom Technology Ltd, 5400 Baden (CH)
(72) Erfinder: Boehm, Fred, 5405 Baden-Dättwil (CH)

(56) Entgegenhaltungen:
- EP-A- 0 679 800
- DE-A- 4 312 041
- KLEINSORGE N: "THE DRIVING FORCE BEHIND VARIABLE-SPEED DRIVES" SIEMENS ENERGY & AUTOMATION, Bd. 11, Nr. 3, Mai 1989, Seiten 10-12, XP000038540
- PATENT ABSTRACTS OF JAPAN vol. 009, no. 092 (M-373), 20.April 1985 & JP 59 218370 A (TOSHIBA KK), 8.Dezember 1984,
- PATENT ABSTRACTS OF JAPAN vol. 010, no. 378 (M-546), 17.Dezember 1986 & JP 61 169628 A (MITSUI ENG & SHIPBUILD CO LTD), 31.Juli 1986,

## Beschreibung

### Technisches Gebiet

Die Erfindung bezieht sich auf ein Verfahren zur Versorgung einer Gasturbinenanlage mit für den Betrieb der Anlage erforderlichen Medien, wobei mindestens ein Medium über eine Fördereinheit in die Anlage eingestrahlt wird und wobei diese Fördereinheit in Wirkverbindung mit einem Antriebsaggregat steht

### Stand der Technik

Für den Betrieb von Gasturbinenanlagen ist es notwendig eine Reihe von Medien, insbesondere Brenn-, Schmier- und Regelöl sowie Wassereinspritzung zur NOₓ-Reduzierung dem Gasturbinenkreislauf sowie mechanisch und/oder thermisch belasteten Anlagenkomponenten direkt zuzuführen.

Neben der Zuführung von Brennstoff in die Brennkammer ist es überdies notwendig fluide Schmierstoffe an eine Vielzahl mechanisch belasteter Komponenten in einer Gasturbinenanlage zu fördern, um die mit der mechanischen Belastung verbundenen Abnutzungseffekte zu reduzieren. Ebenso müssen an geeigneten Stellen, insbesondere an thermisch hoch belasteten Komponenten geeignete Kühlmedien zugeführt werden, die Teilbereiche oder gesamte Anlagenteile vor Überhitzung schützen sollen.

Je nach Förderumfang und der bereitzustellenden Menge der Medien, werden für den Betrieb einer einzigen Gasturbinenanlage eine Vielzahl unterschiedlicher Antriebsaggregate benötigt, die hinsichtlich ihrer Motorleistung auf die jeweiligen Einsatzzwecke hin optimiert sind. So kommen für derartige Einsatzzwecke Elektromotoren im Nieder- und Mittelspannungsbereich zum Einsatz, die durch ihren Variantenreichtum ein Leistungsspektrum von > 10 kW bis hin zu 650 kW abdecken. Diese überaus große Vielzahl unterschiedlich dimensionierter Antriebsaggregate werden wie vorstehend bereits dargelegt für die Versorgung der Anlage mit vorzugsweise fluiden Medien als Pumpen-, Ventillator- oder Fördermotoren eingesetz.

Insbesondere treiben derartige Motoren folgende Komponenten an:
Standard-Brennöl-Block, NOₓ-Block sowie Auxilary-Block.

Die vorstehenden Komponenten sind zum Teil standardisiert und werden in Gasturbinenanlagen unterschiedlicher Form und Größe verwendet.

Solche Verfahren gehen aus D1[EP-A-0 679 800 (Aisin Seiki)] und D2 [Kleinsorge N.: "The driving force behind variable-speed drives" Siemens Energy & Automation, Bd. 11, Nr. 3, Mai 1989 (1989-05), Seiten 10-12, XP000038540] hervor.

Im Hinblick auf eine vereinfachte Konstruktion einer gesamten Gasturbinenanlage sowie Reduzierung der diesbezüglichen Herstellkosten läuft der Einsatz der Vielzahl unterschiedlich dimensionierter zusätzlich benötigter Antriebsaggregate dem Vorhaben zuwider, Gasturbinen möglichst einfach und billig herzustellen.

### Darstellung der Erfindung

Der Erfindung liegt daher die Aufgabe zugrunde, ein Verfahren zur Versorgung Regelung einer Gasturbinenanlage mit für den Betrieb der Anlage erforderlichen Medien, mit einer das Medium bereitstellenden Einheit, einer regelbaren Fördereinheit, die das jeweilige Medium in die Gasturbinenanlage einspeist sowie mit einem die Fördereinheit antreibenden Antriebsaggregat, derart auszugestalten, so daß das Antriebsaggregat für alle notwendigen Schmier-, Kühl- und Zufuhreinheiten nebst Fördereinheiten standardisiert ausgebildet werden kann, so daß der Aufbau einer Gasturbinenanlage vereinfacht und die Herstellungskosten reduziert werden können. Überdies sollen die Vielzahl unterschiedlicher elektrischer Spannungen, Frequenzen und ihre Toleranzen beim Betrieb von Gasturbinenanlagen reduziert werden. Auch sollen Anlaufströme, die mit dem In-Gangsetzen unterschiedlicher elektromotorisch ausgebildeter Antriebsaggregate möglichst vermieden werden, so daß ihre Rückwirkungen auf Schaltanlagen sowie elektronische Logikeinheiten reduziert und ganz vermieden werden können.

Die Lösung der der Erfindung zugrunde liegenden Aufgabe ist im Anspruch 1 angegeben. Den Erfindungsgedanken vorteilhaft ausbildende Merkmale sind Gegenstand der Unteransprüche.

Erfindungsgemäß ist ein Verfahren zur Versorgung einer Gasturbinenanlage gemäß im Oberbegriff des Anspruchs 1 derart ausgebildet, daß das Antriebsaggregat mit elektrisch angespeisten Frequenzumrichtern betrieben wird, welche die Fördereinheit regeln und durch welche der Leistungsbereich der Fördereinheit bestimmt wird.

Frequenzumrichter vermögen aus einem fest vorgegebenen Wechselstromsystem ein neues Wechsel- bzw. Drehstromsystem variabler Frequenz und Amplitude zu erzeugen. Mit Hilfe derartiger Frequenzumrichter ist es möglich, ein und das selbe Antriebsaggregat zum Antrieb unterschiedlich dimensionierter Fördereinheiten zu verwenden, die sich in der Leistungsaufnahme sowie Fördereigenschaften unterscheiden können. Je nach Einstellen des sogenannten Sollwert am Frequenzumrichter kann die Nennleistung des Antriebsaggregates, das als Elektromotor ausgebildet ist, skaliert und eingestellt werden.

Eine entsprechende Regelung der Drehzahl des Antriebsaggregates und damit auch der Leistung des Antriebsaggregates kann über die Frequenz eingestellt werden, die der Frequenzumrichter erzeugt.

Durch die erfindungsgemäße Ausgestaltung der für den Antrieb unterschiedlicher dimensionierter Hilfssysteme, die für den Betrieb einer Gasturbinenanlage erforderlich sind, vorgesehen Antriebsaggregate unter Verwendung eines Frequenzumrichters, läßt sich mit einer minimierten Anzahl von Motorentypen der Betrieb einer vollständigen Gasturbinenanlage bewerkstelligen. Somit sind keine Sonderwicklungen von Motoren mehr nötig. Ebenso kann die Ansteuerung jeweils identischer Antriebsaggregate vereinfacht durchgeführt werden. Die Regelung kann in Zukunft auch über Bussysteme erfolgen.

### Kurze Beschreibung der Erfindung

Die Erfindung wird nachstehend anhand eines Ausführungsbeispiels unter Bezugnahme auf die Zeichnungen näher beschrieben. Es zeigen:
- Fig. 1: Anlagenaufbau mit Antriebsaggregaten gemäß dem Stand der Technik und
- Fig. 2: Anlagenaufbau mit Antriebsaggregaten mit zwischengeschalteten Frequenzumrichtern

### Wege zur Ausführung der Erfindung, gewerbliche Verwendbarkeit

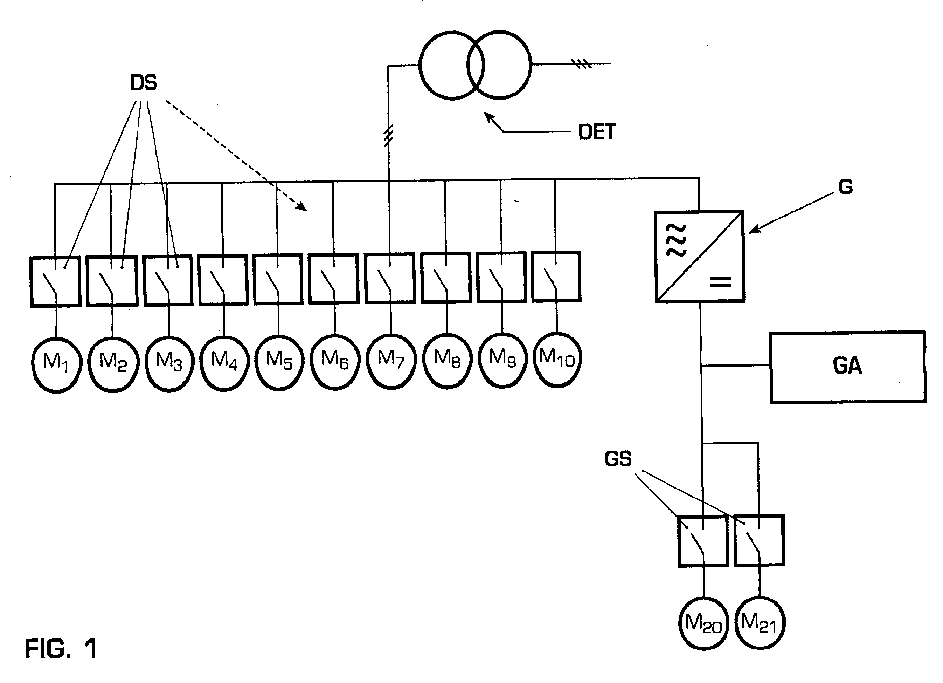

In Figur 1 werden eine Reihe von Antriebsaggregate, die sich aus Drehstrom-Asynchron-Motoren M₁, ..., M₁₀ sowie aus Gleichstrom-Motoren M₂₀, M₂₁ zusammensetzen, von einem Drehstrom-Eigenbedarfs-Transformator DET gespeist. Sowohl die Drehstrom-Asynchron-Motoren als auch die Gleichstrom-Motoren können unterschiedliche Leistungskenndaten aufweisen. So reicht die Produktpalette von typischen in Gasturbinenanlagen einzusetzenden Drehstrom-Motoren von etwa 20 kW bis 650 kW. Als Gleichstrom-Motoren werden hingegen Niederspannungs-Motoren mit typischerweise kleiner 10 kW verwendet.

Für den einheitlichen Betrieb der Motoren mit einer einzigen Energiequelle in Form des Drehstrom-Eigenbedarfs-Transformators DET sind die Drehstrom-Asynchron-Motoren M₁, ..., M₁₀ über einzelne, individuell ausgelegte Drehstrom-Schaltanlagen DS mit dem Transformator DET verbunden.

Zum Betrieb der Gleichstrom-Motoren M₂₀, M₂₁ ist es zusätzlich erforderlich einen Gleichrichter G sowie Gleichstromschaltanlagen GS zwischen dem Transformator DET und den Motoren M₂₀, M₂₁ zu schalten. Für den Fall eines Ausfalls der Drehstromversorgung ist zusätzlich eine Gleichstrom-Anspeisung GA für bspw. eine Notölversorgung vorgesehen.

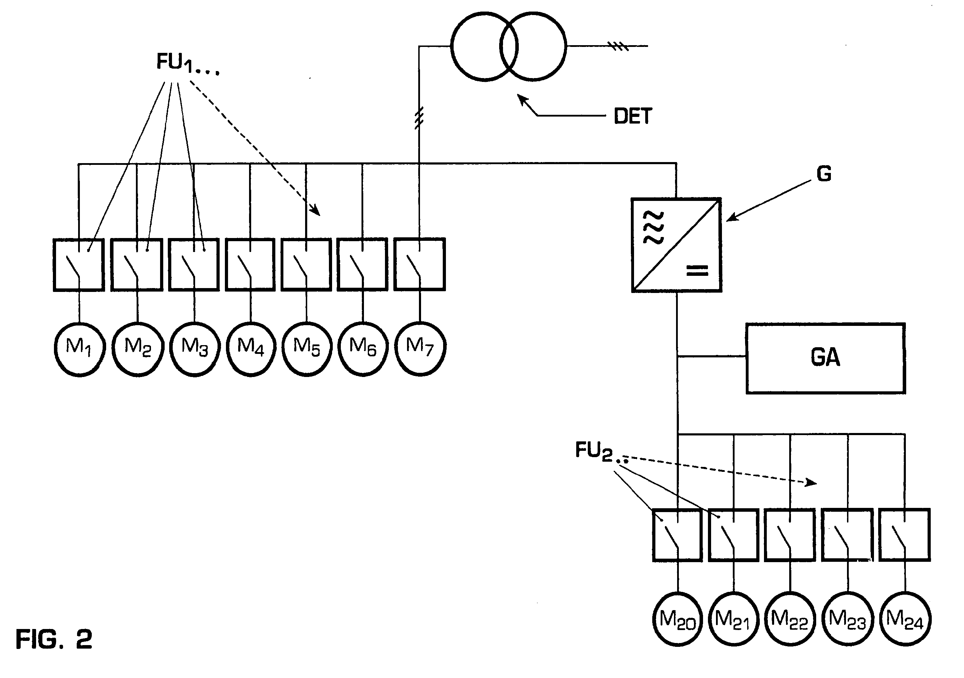

In Figur 2 sind erfindungsgemäß Frequenzumrichter FU anstelle der Schaltanlagen DS und GS vorgesehen. Im übrigen bleiben alle Bezugszeichen, die bereits in Figur 1 eingeführt worden sind auch in Figur 2 erhalten.

Das Anspeisen der unterschiedlich dimensionierten Antriebsaggregate mittels Frequenzumrichter führt zu folgenden Vorteilen:
- Die Gasturbinen-spezifischen Betriebspunkte der jeweiligen Antriebsaggregate können mit dem Frequenzumrichter individuell eingestellt werden. So ist es möglich die Nennleistung eines Motors zu skalieren, indem dem Frequenzumrichter eine Sollwert vorgegeben wird.
- Es erfolgt eine Drezahl- und damit Leistungsregelung der Motoren rein über die Frequenz.
- Verwendung nur eines einzigen Motoren- und Pumpentyps für die gesamte Gasturbinenanlage.
- Sonderwicklungen im Motorenbau entfallen.
- Anlaufströme, die auf der Eigenbedarfsseite auftreten können besser beherrscht werden.
- Eine Regelung der Brennstoffmenge ist ohne Verwendung von Regelventilen möglich.
- Regelung kann ausschließlich über ein Bussystem erfolgen.
- Vorzunehmende Varianten werden auf Seiten des Eigenbedarfstrafo delegiert.
- Bei entsprechendem Redundanzkonzept kann auf Gleichstrommotoren verzichtet werden (Vgl. Fig. 2, M₂₀ - M₂₄)
- Auf AC Mittelspannungs-Motoren kann verzichtet werden.

### BEZUGSZEICHENLISTE

- DET: Drehstrom-Eigenbedars-Transformator
- DS: Drehstrom-Schaltanlage
- FU_{1....}: Frequenzumrichter
- G: Gleichrichter
- GA: Gleichstrom-Anspeisung
- GS: Gleichstrom-Schaltanlage
- M₁, ..., M₁₀: Drehstrom-Asynchron-Motoren
- M₂₀, ..., M₂₄: Gleichstrom-Motoren bei Fig. 1
- M₂₀ ....., M₂₄: Drehstrom-Asynchrom-Motoren bei Fig. 2
- FU_{2.....}: Frequenzumrichter ohne Gleichrichterteil

## Patentansprüche

1. Verfahren zur Versorgung einer Gasturbinenanlage mit für den Betrieb der Anlage erforderlichen Medien, wobei mindestens ein Medium über eine Fördereinheit in die Anlage eingestrahlt wird und wobei diese Fördereinheit in Wirkverbindung mit einem Antriebsaggregat steht, wobei das Antriebsaggregat mit elektrisch angespeisten Frequenzumrichtern betrieben wird, welche die Fördereinheit regeln und durch welche der Leistungsbereich der Fördereinheit bestimmt wird, **dadurch gekennzeichnet, dass** durch eine Vielzahl unterschiedlicher Fördereinheiten, die sich in der Leistungsaufnahme sowie Fördereigenschaften unterscheiden, durch Einstellen des jeweiligen Sollwerts am jeweiligen Frequenzumrichter die Nennleistung des Antriebsaggregats, das als Elektromotor ausgebildet ist, skaliert und eingestellt wird.

2. Verfahren nach Anspruch 1, **dadurch gekennzeichnet, dass** die Medien Brennstoffe und/oder Schmierstoffe sind, die zur Verbrennung bzw. Schmierung beweglicher Teile zum Betrieb der Gasturbinenanlage benötigt werden.

3. Verfahren nach Anspruch 1 oder 2, **dadurch gekennzeichnet, dass** durch Setzen eines Sollwertes am Frequenzumrichter der Nennleistungsbereich des Antriebsaggregates eingestellt wird.

4. Verfahren nach einem der Ansprüche 1 bis 3, **dadurch gekennzeichnet, dass** das Antriebsaggregat ein Elektromotor ist, dessen Drehzahl und Leistung über die Frequenz, die vom Frequenzumrichter abgegeben wird, geregelt wird.

5. Verfahren nach einem der Ansprüche 1 bis 4, **dadurch gekennzeichnet, dass** zur Regelung des Antriebsaggregates ein Bussystem eingesetzt wird.

6. Verfahren nach einem der Ansprüche 1 bis 5, **dadurch gekennzeichnet, dass** an einer Gasturbinenanlage eine Vielzahl unterschiedliche Fördereinheiten vorgesehen sind, die mit jeweils identischen Antriebsaggregaten verbunden werden.

## Claims

1. Method for supplying a gas-turbine installation with media which are required to operate the installation, at least one medium being injected into the installation via a feed unit and this feed unit being operatively connected to a drive assembly, the drive assembly being operated using electrically fed frequency converters which control the feed unit and by means of which the performance range of the feed unit is determined, **characterized in that** the rated power output of the drive assembly, which is in the form of an electric motor, is scaled and adjusted by a multiplicity of different feed units, whose power consumption and feed characteristics differ, by setting the respective nominal value on the respective frequency converter.

2. Method according to Claim 1, **characterized in that** the media are fuels and/or lubricants which are required for combustion or lubrication of moving parts for operation of the gas-turbine installation.

3. Method according to Claim 1 or 2, **characterized in that** the rated performance range of the drive assembly is adjusted by setting a nominal value on the frequency converter.

4. Method according to one of Claims 1 to 3, **characterized in that** the drive assembly is an electric motor whose rotation speed and power output are controlled via the frequency which is output by the frequency converter.

5. Method according to one of Claims 1 to 4, **characterized in that** a bus system is used to control the drive assembly.

6. Method according to one of Claims 1 to 5, **characterized in that** a multiplicity of different feed units are provided on a gas-turbine installation and are connected to respectively identical drive assemblies.

## Revendications

1. Procédé d'alimentation d'une installation de turbine à gaz comprenant des milieux nécessaires pour le fonctionnement de l'installation, au moins un milieu étant injecté dans l' installation par le biais d'une unité de refoulement et cette unité de refoulement étant en liaison fonctionnelle avec un organe d'entraînement, l'organe d'entraînement fonctionnant au moyen de changeurs de fréquence électriques qui régulent l'unité de refoulement et qui permettent de définir la plage de puissance de l'unité de refoulement, **caractérisé en ce qu'**une pluralité d'unités de refoulement différentes, qui se distinguent de par leur capacité de puissance et leurs propriétés de refoulement, permettent, par ajustement de la valeur de consigne respective sur chaque changeur de fréquence respectif, de mettre à l'échelle et d'ajuster la puissance nominale de l'organe d'entraînement qui est réalisé sous forme de moteur électrique.

2. Procédé selon la revendication 1, **caractérisé en ce que** les milieux sont des combustibles et/ou des lubrifiants qui sont nécessaires pour la combustion ou la lubrification de pièces mobiles pour le fonctionnement de l'installation de turbine à gaz.

3. Procédé selon la revendication 1 ou 2, **caractérisé en ce que** la plage de puissance nominale de l'organe d'entraînement est ajustée en fixant une valeur de consigne du changeur de fréquence.

4. Procédé selon l'une quelconque des revendications 1 à 3, **caractérisé en ce que** l'organe d'entraînement est un moteur électrique dont le régime et la puissance sont régulés par le biais de la fréquence qui est fournie par le changeur de fréquence.

5. Procédé selon l'une quelconque des revendications 1 à 4, **caractérisé en ce que** l'on utilise un système de bus pour réguler l'organe d'entraînement.

6. Procédé selon l'une quelconque des revendications 1 à 5, **caractérisé en ce que** l'on prévoit sur une installation de turbine à gaz une pluralité d'unités de refoulement différentes, qui sont connectées à chaque fois à des organes d'entraînement identiques.
